# EUROPEAN PATENT APPLICATION

(11) **EP 0 704 151 A1**
(43) Date of publication of application: **03.04.1996**
(21) Application number: 95202548.4
(22) Date of filing: 21.09.1995
(51) Int. Cl.: A01G 9/10

(54) **A tray**

(30) Priority: 28.09.1994 NL 9401587
(71) Applicant: SYNPRODO HORTIPRODUCTS B.V., NL-6603 BM Wijchen (NL)
(72) Inventor: Mortko, Stanislaw Adam Jurian, NL-5144 GH Waalwijk (NL); Voogd, Ron, NL-4143 AC Leerdam (NL)
(74) Representative: Veldman-Dijkers, Cornelia G.C., Ir.

(57) **Abstract**

A tray provided with a plurality of interconnected compartments (1) for receiving balls of cultivating material containing seeds or seedlings, whereby said compartments (1) are provided with upright side walls (2) and a bottom part, whereby the bottom parts of the compartments include upwardly sloping wall parts (5-8) provided with passages (9), as well as supporting ribs (10,11), which jointly form a supporting surface for the tray.

## Description

The invention relates to a tray provided with a plurality of interconnected compartments for receiving balls of cultivating material containing seeds or seedlings, whereby said compartments are provided with upright side walls and a bottom part.

Trays of this type are generally made of a thin plastic foil by means of a deep drawing process. With the known trays the compartments are thereby provided with flat bottoms being in line, which form a supporting surface for the tray. Holes are provided in said bottoms for the supply of a nutrient fluid, such as water, possibly enriched with nutritive substances. During the time that the plants are raised and/or during the time that they are offered for sale a large number of such trays are usually placed in a basin or the like, to which water or the like is supplied at regular intervals, which is discharged therefrom again after some time, according to the so-called ebb and flow system. The aim is thereby that part of the water supplied in this manner is drawn into the interior of the compartments via the holes provided in the bottoms of the compartments. With the known construction comprising the flat bottoms it appears to be impossible, however, to realize this intended supply of sufficient water to the interior of the compartments.

Another problem is that insufficient air can enter the compartments via the holes provided in the bottoms thereof during the period that no water is present around the compartments.

According to the invention the bottom parts of the compartments include upwardly sloping wall parts provided with passages, as well as supporting ribs, which jointly form a supporting surface for the tray.

When using the present invention at least substantially each compartment will be provided with a supporting rib, which may be made comparatively narrow, whilst passages are provided in the bottom parts of the compartments, some distance above the supporting surface formed by the various supporting ribs, which passages are readily accessible in use, both for supplying a fluid, and, if no fluid is present around said compartments, for supplying air therethrough. A construction of this type is also quite suitable for trays which are made of a thin plastic foil by means of a deep drawing process.

The invention will be explained in more detail hereafter with reference to a possible embodiment of a tray according to the invention diagrammatically illustrated in the accompanying Figures.

Figure 1 is a diagrammatic plan view of a part of a tray according to the invention.

Figure 2 is a view of Figure 1, in the direction according to arrow II in Figure 1.

Figure 3 is a view of Figure 1, in the direction according to arrow III in Figure 1.

Figure 4 is a perspective view of the tray shown in Figure 1.

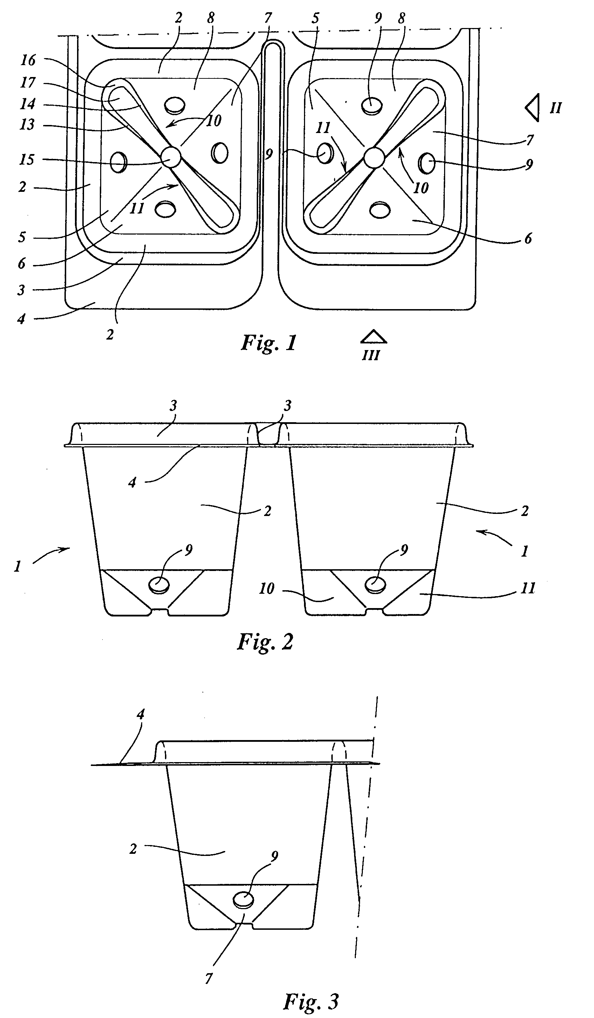

The embodiment of a tray according to the invention which is shown in Figures 1 - 3 comprises a plurality of compartments 1, which are disposed in side-by-side relationship in two rows. In the illustrated embodiment each compartment comprises four walls parts 2 extending substantially perpendicularly to each other, which wall parts slope upwards, so that the diameter of a compartment gradually increases from the bottom upwards.

At their upper ends the wall parts 2 are connected, via a substantially U-shaped connecting part 3, to a plate-shaped part 4 interconnecting the compartments 1.

The bottom part of each compartment 1 is more or less pyramidal, with four upwardly sloping wall parts 5 - 8, in each of which a passage 9 is provided. Said wall parts 5 - 8 include an angle of ± 40° with the horizontal.

Two supporting ribs 10 and 11 being in line and extending along a diagonal of the bottom part join said bottom part. As will be apparent in particular from Figure 1, each supporting rib is formed by two spaced-apart wall parts 13 and 14, which extend from a passage 15 provided in the centre of the bottom part in the direction of a corner of the compartment and which are interconnected there by means of a curved wall part 16. Said wall parts 13 and 14 slope slightly upwards from a bottom surface 17 interconnecting said wall parts at their bottom ends in a direction away from each other.

It will be apparent that as a result of this configuration of the supporting ribs it is also possible without any problem to manufacture the above-described tray of a thin plastic foil by means of a deep drawing process or the like.

During use the tray will be supported by the bottom surfaces 17 of the supporting ribs, which jointly form a supporting surface for the tray. It will be apparent that if the tray is disposed in a basin or the like, being supported by said supporting surface, the passages 9 and 15 located near the bottom sides of the compartments will be readily accessible at all times for passing fluid and/or air therethrough into the interior of the various compartments, so that an adequate nutrition and aeration of the roots of the plants to be raised in the tray can be ensured.

As is furthermore apparent from Figure 1, the supporting ribs forming part of compartments located adjacent to each other extend in opposite directions, obliquely to the longitudinal direction and the transverse direction respectively of the tray. This is inter alia conducive to an even transport of the trays over roller conveyors.

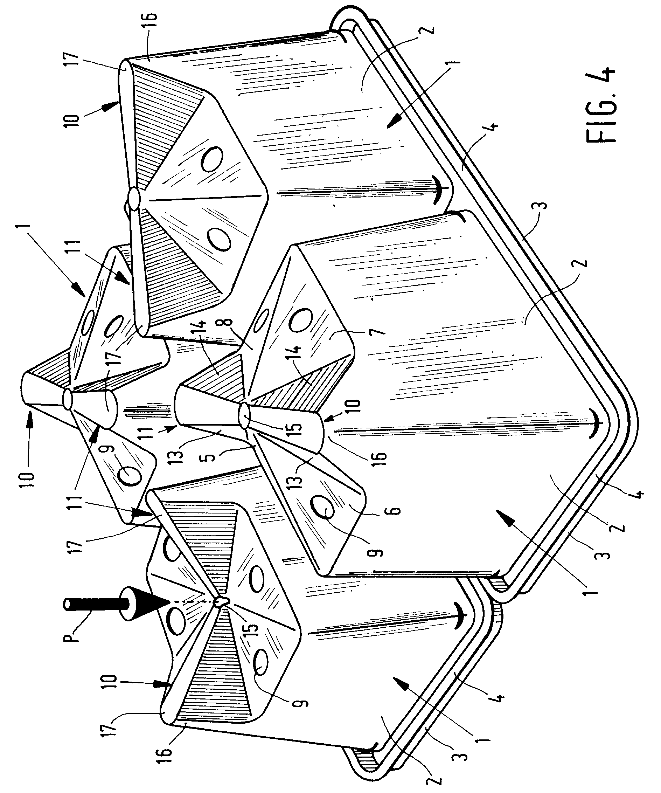

Figure 4 is a perspective view of the tray shown in Figure 1. This configuration of the bottom part makes it possible to remove the ball plants present inside the compartments from said compartments in a simple manner by pressing the centre of the bottom part located near the passage 15 in the direction indicated by the arrow P, towards the plate-shaped part 4, by mechanical means or by hand. The supporting ribs 10, 11 will be positioned at an angle with respect to each other thereby, whilst the wall parts 5, 6, 7 and 8 will come to lie in substantially one plane. After the ball has been removed the centre is released, after which the bottom part will return to its original, undeformed position under the influence of material stresses.

## Claims

1. A tray provided with a plurality of interconnected compartments for receiving balls of cultivating material containing seeds or seedlings, whereby said compartments are provided with upright side walls and a bottom part, characterized in that the bottom parts of the compartments include upwardly sloping wall parts provided with passages, as well as supporting ribs, which jointly form a supporting surface for the tray.

2. A tray according to claim 1, characterized in that said bottom part is more or less pyramidal, whilst a passage is provided near the summit of said pyramidal part.

3. A tray according to claim 1 or 2, characterized in that two supporting ribs being in line are provided under each bottom part.

4. A tray according to any one of the preceding claims, characterized in that a supporting rib is bounded by two upwardly sloping wall parts, the bottom edges of which are interconnected by a bottom part.

5. A tray according to any one of the preceding claims, characterized in that the supporting ribs of compartments located adjacent to each other extend in opposite directions, obliquely to the longitudinal direction of the tray.

6. A tray according to any one of the preceding claims, characterized in that said tray is made of a thin foil by means of a deep drawing process.
